# EUROPEAN PATENT APPLICATION

(11) **EP 4 535 526 A1**
(43) Date of publication of application: **09.04.2025**
(21) Application number: 23849033.8
(22) Date of filing: 02.06.2023
(51) Int. Cl.: H01M 50/20

(54) **BATTERY PACK FOR SUPPLYING POWER TO ELECTRONIC DEVICE, BATTERY COMPARTMENT, AND TOOL SYSTEM**

(30) Priority: 05.08.2022 CN 202210936764
(71) Applicant: Nanjing Chervon Industry Co., Ltd., Nanjing, Jiangsu 211106 (CN)
(72) Inventor: GAO, Yunfei, Nanjing, Jiangsu 211106 (CN); YAMAOKA, Toshinari, Nanjing, Jiangsu 211106 (CN); HUANG, Jiajun, Nanjing, Jiangsu 211106 (CN); ZHANG, Yuexiang, Nanjing, Jiangsu 211106 (CN); CHEN, Liang, Nanjing, Jiangsu 211106 (CN); WU, Zhiyong, Nanjing, Jiangsu 211106 (CN)
(74) Representative: Sun, Yiming
(86) International application number: PCT/CN2023/098053
(87) International publication number: WO 2024/027323

(57) **Abstract**

Provided is a battery pack for powering an outdoor moving device, a battery compartment, and a tool system. The battery pack includes: a housing configured to be mounted to the electronic device and supported by the electronic device; a plurality of cells disposed in the housing and capable of providing a voltage greater than or equal to 36V; and a terminal assembly connected to the plurality of cells and configured to electrically connect the battery pack to the electronic device. A capacity of the battery pack is greater than or equal to 20 Ah, and a ratio of the capacity of the battery pack to a weight of the battery pack is higher than or equal to 2 Ah/Kg.

## Description

This application claims priority to Chinese Patent Application No. 202210936764.6 filed with the China National Intellectual Property Administration (CNIPA) on August 5, 2022, the disclosure of which is incorporated herein by reference in its entirety.

### TECHNICAL FIELD

The present application relates to an energy storage apparatus, for example, to a battery pack for powering an electronic device, a battery compartment, and a tool system.

### BACKGROUND

With the development of battery technology, power tools are gradually replacing engine tools. In order that a cordless power tool has a better use effect, a battery pack is also required to have a higher output characteristic. For example, to achieve a working effect and a battery life similar to those of an engine tool, increasingly high requirements are imposed on the output power, capacity, or charging and discharging rates of the battery pack.

### SUMMARY

This application provides a battery pack, a battery compartment and a tool system with better output performance.

This application adopts the technical solutions described below. A battery pack for powering an electronic device includes: a housing configured to be mounted to the electronic device and supported by the electronic device; a plurality of cells disposed in the housing and capable of providing a voltage greater than or equal to 36V; and a terminal assembly connected to the plurality of cells and configured to electrically connect the battery pack to the electronic device. A capacity of the battery pack is greater than or equal to 20 Ah, and a ratio of the capacity of the battery pack to a weight of the battery pack is higher than or equal to 2 Ah/Kg.

In an example, the plurality of cells are lithium iron phosphate cells.

In an example, a nominal voltage of the battery pack is higher than or equal to 56 V.

In an example, a weight of the battery pack is greater than or equal to 9 Kg.

In an example, a length of each of the plurality of cells is greater than or equal to 8 cm.

In an example, a diameter of each of the plurality of cells is greater than or equal to 3 cm.

In an example, an average discharging current of the battery pack is greater than or equal to 30 A.

In an example, the electronic device includes an outdoor moving device.

In an example, the electronic device includes an adapter.

A battery pack for powering an outdoor moving device includes: a housing configured to be mounted to the outdoor moving device and supported by the outdoor moving device; a handle disposed on the housing and configured to be gripped by a user; a plurality of cells disposed in the housing; and a terminal assembly configured to be electrically connected to the outdoor moving device. An energy of the battery pack is greater than or equal to 2 KWh, and a ratio of a length of the handle to a length of the battery pack in an extension direction of the handle is greater than or equal to 0.6.

In an example, a ratio of a length of the handle to a length of the battery pack in an extension direction of the handle is greater than or equal to 0.9.

In an example, the handle and the housing are integrally formed.

In an example, the battery pack further includes a mounting rail disposed on a side surface of the battery pack to guide the battery pack when the battery pack is mounted on the outdoor moving device.

In an example, an extension direction of the handle is perpendicular to an extension direction of the mounting rail.

In an example, the housing is formed with a storage portion, and the handle is capable of being rotated to be stored in the storage portion.

A battery pack for powering an outdoor moving device includes: a housing configured to be mounted to the outdoor moving device and supported by the outdoor moving device; a handle assembly disposed on the housing and configured to be gripped by a user; a plurality of cells disposed in the housing; and a terminal assembly configured to be electrically connected to the outdoor moving device. An energy of the battery pack is greater than or equal to 2 KWh, and the handle assembly includes at least two separate handles.

In an example, the at least two separate handles are mounted on the same surface of the battery pack.

In an example, the at least two separate handles are mounted on the different surfaces of the battery pack separately.

In an example, the battery pack further includes a mounting rail disposed on a side surface of the battery pack to guide the battery pack when the battery pack is mounted on the outdoor moving device.

In an example, an extension direction of at least one of the at least two separate handles is perpendicular to an extension direction of the mounting rail.

A battery pack includes: a housing; a cell module including a plurality of cells and disposed in the housing, wherein the plurality of cells are connected in series and/or in parallel; and a terminal assembly electrically connected to the plurality of cells. A bottom of the housing is formed with liquid collection slots.

In an example, areas of the liquid collection slots on a section of the battery pack are greater than or equal to 20 cm².

In an example, the cell module further includes a bracket, and the bracket is capable of directing a liquid to the liquid collection slots.

In an example, the plurality of cells are lithium iron phosphate cells.

A battery pack for powering a power tool includes: a housing configured to be mounted to the power tool and supported by the power tool; a cell module including a plurality of cells and disposed in the housing, wherein the plurality of cells are connected in a combined series-parallel configuration; and a terminal assembly electrically connected to the plurality of cells and configured to electrically connect the battery pack to the power tool. The terminal assembly includes guide structures, and the power tool includes corresponding structures that match the guide structures; after the guide structures match the corresponding structures, the terminal assembly is capable of floating within a range of a preset distance range.

In an example, the preset distance is less than or equal to 2 cm.

In an example, the guide structures are guide columns and the corresponding structures are guide grooves.

**In** an example, the guide structures are guide grooves and the corresponding structures are guide columns.

**In** an example, the terminal assembly includes at least a positive charging terminal, a negative charging terminal, a positive discharging terminal and a negative discharging terminal.

**In** an example, the positive charging terminal and the positive discharging terminal are the same terminal, or the negative charging terminal and the negative discharging terminal are the same terminal.

A battery pack for powering a power tool includes: a housing configured to be mounted to the power tool and supported by the o power tool, wherein the housing defines a bottom surface of the battery pack; a cell module including a plurality of cells and disposed in the housing, wherein the plurality of cells are connected in a combined series-parallel configuration; and a terminal assembly electrically connected to the plurality of cells and configured to electrically connect the battery pack to the power too. A height difference between the terminal assembly and the bottom surface of the battery pack is greater than or equal to 3 cm.

**In** an example, the housing is provided with a mounting rail, the mounting rail is disposed on a side surface of the battery pack, and the mounting rail has a guiding function when the battery pack is mounted to the power tool.

In an example, the terminal assembly is arranged at a first end of the mounting rail.

In an example, a second end of the mounting rail extends to the bottom surface of the battery pack.

In an example, a ratio of a length of the mounting rail to a height of the battery pack is greater than or equal to 0.5.

In an example, a recess is formed at a bottom of the housing, and the terminal assembly is arranged in the recess.

A battery compartment includes: a compartment body configured to accommodate a battery pack; and a locking assembly disposed on the compartment body and configured to lock the battery pack. The locking assembly includes at least two locking portions separately disposed, the at least two locking portions have a first state and a second state, the at least two locking portions are in the first state when the battery pack is installed in the compartment body; after the at least two locking portions are locked, the at least two locking portions enter and maintain the second state; after the battery pack is removed from the compartment body, the at least two locking portions automatically restore to the second state.

In an example, the locking assembly includes two locking portions; the two locking portions are arranged on opposite sides of the battery compartment.

In an example, each of the at least two locking portions includes at least: an elastic member mounted on a rotation shaft of the each of the at least two locking portions and configured to keep the each of the at least two locking portions in the second state; a stopper portion configured to abut against the housing of the battery pack to keep the battery pack in the compartment body; and a rotary toggle exposed outside the compartment body and configured to allow a user to change the state of the each of the at least two locking portions.

In an example, when the elastic member is in a relaxed state, the each of the at least two locking portions is in the second state; when the elastic member is in a compressed state, the each of the at least two locking portions is in the first state.

A tool system includes at least a power tool and a battery pack. The battery pack includes a terminal assembly. The power tool includes a battery compartment. The battery compartment includes: a compartment body configured to accommodate the battery pack; a compartment body terminal assembly configured to dock with the terminal assembly of the battery pack; and a locking assembly disposed on the compartment body and configured to lock the battery pack. The locking assembly includes at least two locking portions, and the at least two locking portions are respectively arranged on both sides of a length direction of the compartment body. wherein the compartment body has a first center plane in a direction perpendicular to the length direction of the compartment body. A distance between one of the at least two locking portions and the compartment body terminal assembly is less than a distance between the compartment body terminal assembly and the first center plane.

A tool system includes at least a power tool and a battery pack. The power tool includes a battery compartment, and the battery compartment includes a compartment body and first positioning portions. The battery pack includes: a housing mounted to the compartment body and supported by the compartment body; a plurality of cells disposed in the housing; a terminal assembly connected to the plurality of cells and configured to electrically connect the battery pack to the power tool; a mounting rail disposed on a side surface of the housing, wherein the mounting rail has a guiding function when the battery pack is mounted to the battery compartment; and second positioning portions disposed a bottom surface of the housing, wherein the second positioning portions mate with the first positioning portions to play a positioning function when the battery pack is mounted in the battery compartment.

In an example, the first positioning portions are raised structures, and the second positioning portions are recessed structures.

In an example, the terminal assembly is arranged at an end of the mounting rail.

A battery pack includes: a housing including at least a first housing and a second housing; a plurality of cells disposed in the housing; a terminal assembly disposed on the housing and electrically connected to the plurality of cells, wherein a first end of the terminal assembly is arranged inside the housing, and a second end of the terminal assembly is arranged outside the housing; and a first sealing structure and a second sealing structure different from the first sealing structure, wherein the first sealing structure is configured to seal a gap between the first housing and the second housing, and the second sealing structure is configured to seal a gap between the terminal assembly and the housing.

In an example, the first sealing structure is at least one of a sealant, a sealing ring, or a sealing sponge.

In an example, the second sealing structure is at least one of a sealant, a sealing ring, or a sealing sponge.

A sealing method for a battery pack is provided. The battery pack includes: a housing including at least a first housing and a second housing; a plurality of cells disposed in the housing; and a terminal assembly disposed on the housing and electrically connected to the plurality of cells, wherein a first end of the terminal assembly is arranged inside the housing, and a second end of the terminal assembly is arranged outside the housing. The sealing method includes: using a first sealing structure to seal a gap between the first housing and the second housing; and using a second sealing structure different from the first sealing structure to seal a gap between the terminal assembly and the housing.

A battery pack for powering an outdoor moving device includes: a housing configured to be mounted to the outdoor moving device and supported by the outdoor moving device; a plurality of cells disposed in the housing, wherein each of the plurality of cells is cylindrical and a diameter of the each of the plurality of cells is greater than or equal to 3 cm; a terminal assembly configured to be electrically connected to the outdoor moving device; a handle assembly disposed on the housing and configured to be gripped by a user; and a mounting rail disposed on the housing and having a guiding function when the battery pack is mounted to the outdoor moving device. A handle in the handle assembly is symmetrical about a midplane, and a vertical distance between the center of gravity of the battery pack and the midplane is less than or equal to twice the diameter of the each of the plurality of cells.

**In** an example, the mounting rail includes two opposing rails.

**In** an example, the mounting rail includes a rail.

**In** an example, the mounting rail is formed on the housing.

In an example, the plurality of cells are lithium iron phosphate cells.

A battery pack for powering an outdoor moving device includes: a housing configured to be mounted to the outdoor moving device and supported by the outdoor moving device; and a cell module including a plurality of cells and a bracket, wherein the bracket includes a support structure supporting the plurality of cells and a guide structure guiding the cell module to be mounted in the housing.

In an example, the guide structure is a guide rib.

In an example, the guide structure is a guide groove.

In an example, the guide structure is parallel to a mounting direction of the cell module.

In an example, the guide structure is perpendicular to a length direction of each of the plurality of cells.

In an example, each of the plurality of cells is cylindrical and a diameter of the each of the plurality of cells is greater than or equal to 3 cm.

In an example, a length of each of the plurality of cells is greater than or equal to 8 cm.

A battery pack for powering an outdoor moving device includes: a housing configured to be mounted to the outdoor moving device and supported by the outdoor moving device; and a cell module mounted in the housing and including a plurality of cells and a plurality of connection pole pieces, wherein each of the plurality of connection pole pieces connects at least two ones of the plurality of cells. Each of the plurality of connection pole pieces is connected to each of the plurality of cells through welding, and a ratio of a welding area to a surface area of the each of the plurality of connection pole pieces is greater than or equal to 0.1.

In an example, a diameter of the each of the plurality of cells is greater than or equal to 3 cm.

In an example, a welding path between the each of the plurality of connection pole pieces and the each of the plurality of cells is a closed figure.

A battery pack for powering an outdoor moving device includes: a housing configured to be mounted to the outdoor moving device and supported by the outdoor moving device; and a cell module mounted in the housing and including a plurality of cells; wherein each of the plurality of cells is cylindrical and a diameter of the each of the plurality of cells is greater than or equal to 3 cm.

In an example, a length of the each of the plurality of cells is greater than or equal to 8 cm.

In an example, a ratio of a length of the each of the plurality of cells to a width of the battery pack is greater than or equal to 0.7.

A battery pack for powering an outdoor moving device includes: a housing configured to be mounted to the outdoor moving device and supported by the outdoor moving device; a cell module mounted in the housing and including a plurality of cells, a positive pole piece and a negative pole piece, wherein the positive pole piece is connected to a positive pole of at least one of the plurality of cells, and the negative pole piece is connected to a negative pole of at least one of the plurality of cells; and a terminal assembly configured to be electrically connected to the outdoor moving device and including a positive terminal connected to the positive pole piece and a negative terminal connected to the negative pole piece. A minimum distance between the positive pole piece and the negative pole piece is greater than or equal to 7 cm.

A battery pack includes: a housing; a cell module mounted in the housing and including a plurality of cells; a detection unit configured to perform single-cell detection on the plurality of cells; and a control unit configured to control the charging/discharging of the plurality of cells and communicatively connected to the detection unit. The control unit is configured to reset the detection unit under a first preset condition, and the detection unit is configured to reset the control unit under a second preset condition.

In an example, the detection unit is further configured to collect a single-cell voltage of each one of the plurality of cells and send the single-cell voltage of the each one of the plurality of cells to the control unit, the control unit is further configured to obtain a total voltage of the battery pack, determine whether the detection unit is abnormal based on the total voltage and the single-cell voltage, and determine that the first preset condition is satisfied when the detection unit is abnormal.

In an example, the detection unit is further configured to determine that a second preset condition is satisfied when the detection unit does not receive communication from the control unit within a preset time.

### BRIEF DESCRIPTION OF DRAWINGS

FIG. 1 is a perspective view of a battery pack of an example;
FIG. 2 is a perspective view of a battery pack of an example from another angle;
FIG. 3 is a perspective view of a battery pack of an example from another angle;
FIG. 4 is an exploded view of a battery pack of an example;
FIG. 5 is a structural view of a partial housing of a battery pack of an example;
FIG. 6 is a structural view of a terminal assembly of an example;
FIG. 7 is a sectional view of a battery pack of an example;
FIG. 8 is a sectional view of a battery compartment with a battery pack mounted in an example;
FIG. 9a is a sectional view of a battery compartment with no battery pack mounted in an example;
FIG. 9b is a sectional view of a battery compartment with no battery pack mounted in an example;
FIG. 10 is a structural view of a battery compartment with no battery pack mounted in an example;
FIG. 11 is a sectional view of a floating structure in a battery compartment in an example; and
FIG. 12 is a partial circuit diagram of a battery pack in an example.

### DETAILED DESCRIPTION

The present application is described below in detail in conjunction with drawings and examples.

It is to be understood by those skilled in the art that in the disclosure of the present application, orientations or position relations indicated by terms such as "up", "down", "front", "rear", "left", and "right" are based on the drawings. These orientations or position relations are intended only to facilitate and simplify the description of the present application and not to indicate or imply that an apparatus or element referred to must have such particular orientations or must be configured or operated in such particular orientations. Thus, the terms are not to be construed as limiting the present application.

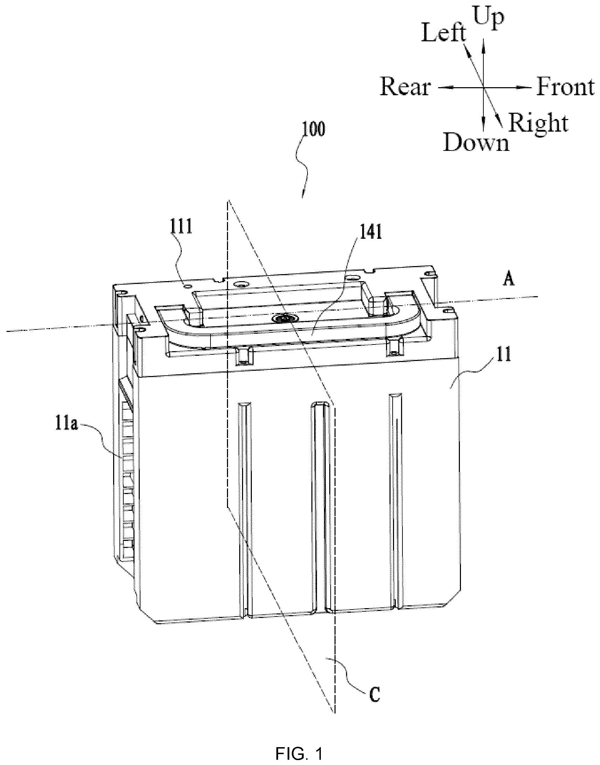

A battery pack 100 shown in FIG. 1 is an energy storage apparatus capable of storing electrical energy to power an electronic device. In this example, the electronic device may include a large-sized outdoor moving device such as a riding lawn mower and a snow thrower. Alternatively, the electronic device may include some energy conversion devices, such as an adapter or an inverter, capable of converting the electrical energy outputted by the battery pack 100 so as to power other small-sized power tools such as handheld power tools and power some household electric devices such as a lamp, a mosquito-killing device, a fan, a cell phone, a computer, and other electric devices in daily lives. In the following examples, an outdoor moving device is used as an optionally example of the electronic device for description, but other types of electronic devices are not excluded.

In this example, the weight of the battery pack 100 shown in FIG. 1 is greater than or equal to 9 kg. In an example, the weight of the battery pack 100 is greater than or equal to 10 kg, or greater than or equal to 11 kg, or greater than or equal to 12 kg, or greater than or equal to 13 kg, or greater than or equal to 14 kg, or greater than or equal to 15 kg. For example, the weight of the battery pack 100 is 9 kg, 10 kg, 15 kg, or the like. The nominal voltage of the battery pack 100 is about 56 V. For example, the nominal voltage of the battery pack 100 may be 54 V, 58 V, or the like. In an example, the nominal voltage of the battery pack 100 is higher than or equal to 56 V, or higher than or equal to 50 V, or higher than or equal to 48 V. The capacity of the battery pack 100 is greater than or equal to 20 Ah. In an example, the capacity of the battery pack 100 is greater than or equal to 30 Ah, or greater than or equal to 40 Ah, or greater than or equal to 50 Ah. For example, the capacity of the battery pack 100 may be 20 Ah, 30 Ah, 40 Ah, 50 Ah, or the like. The ratio of the capacity of the battery pack 100 to the weight of the battery pack 100 is higher than or equal to 2 Ah/kg, for example, 2 Ah/kg, 4 Ah/kg, or 5 Ah/kg. The average discharging current of the battery pack 100 is greater than or equal to 30 A. For example, the average discharging current of the battery pack 100 may be 30 A, 35 A, 40 A, or the like. The energy of the battery pack 100 is greater than or equal to 2 kWh. In an example, the energy of the battery pack 100 is greater than or equal to 3 kWh, or greater than or equal to 4 kWh, or greater than or equal to 5 kWh. For example, the energy of the battery pack 100 may be 2 kWh, 3 kWh, 4 kWh, 5 kWh, or the like. In an example, the battery pack 100 is substantially in the shape of a cuboid, which has a height of about 330 mm, a length range of about 320 mm to 330 mm, and a width range of about 170 mm to 180 mm.

In fact, any battery pack 100 which adopts the essence of the technical solutions of the present application described below or any electronic device powered by the battery pack 100 belongs to the scope of the present application.

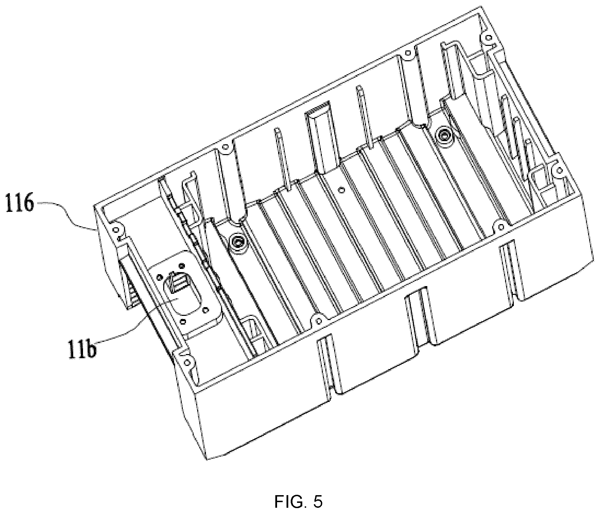

As shown in FIGS. 1 to 6, the battery pack 100 includes a housing 11, a terminal assembly 12, and a cell module 13. The housing 11 forms the body of the battery pack 100 and is substantially in the shape of the cuboid. The housing 11 is formed with an accommodating cavity for accommodating the cell module 13. In an example, the housing 11 may include an upper cover, a barrel, and a lower cover which are capable of constituting the accommodating cavity substantially closed. The housing 11 may include a left housing and a right housing, an upper and a lower housing, or housings assembled in another form. A terminal assembly 12 is mounted on the housing 11, and the battery pack 100 is electrically connected to the electronic device through the terminal assembly 12 to power the electronic device. In an example, one or more exhaust valves 111 may be disposed on the upper surface of the housing 11 or a side surface of the housing 11 so that the flow of gas is formed between the accommodating cavity and the outside. In an example, the area of the exhaust valve 111 is larger than or equal to 5 mm², and the exhaust valve 111 may be a one-way valve and include a polymer membrane. Liquid collection slots 112 are formed in the bottom surface of the housing 11. A liquid collection slot 112 can collect a liquid in the accommodating cavity, where the liquid may be a liquid flowing out of a damaged cell 131 in the cell module 13 or may be a liquid formed through the liquefaction of a gas in the accommodating cavity. In an example, the areas of the liquid collection slots 112 on a section of the battery pack 100 are greater than or equal to 20 cm². For example, the areas of the liquid collection slots 112 on the section formed along the front and rear direction of the battery pack may be 20 cm², 25 cm², 30 cm², or the like. In other examples, wheels may be detachably disposed under the housing 11 to support the housing 11 so that a user can move the battery pack 100 with less effort.

To facilitate the operation of the user, a handle assembly may also be disposed on the housing 11 so that it is convenient for the user to lift the battery pack 100. In an example, the handle assembly may include one or more handles 141. For example, the handle assembly may include two separate handles 141 which may be disposed on the same surface of the housing 11 or different surfaces of the housing 11. In an example, the ratio of the length of the handle 141 to the length of the battery pack 100 in the extension direction A of the handle 141 is higher than or equal to 0.6. In an example, the ratio of the length of the handle 141 to the length of the battery pack 100 in the extension direction A of the handle 141 is higher than or equal to 0.7, or higher than or equal to 0.8, or higher than or equal to 0.9. For example, the ratio of the length of the handle 141 to the length of the battery pack 100 in the extension direction A of the handle 141 is 0.6, 0.7, 0.8, 0.9, or 1. In an example, the handle 141 and the housing 11 may be integrally formed. In an example, the handle 141 is detachably mounted on a surface of the housing 11. For example, the upper surface of the housing 11 is recessed inward to form a square first slot, a circular first slot, or a first slot of another shape (not shown). The handle 141 may be fixed to a slot wall of the first slot by pins and is rotatable about the pins by an angle of approximately 180° on the housing 11. In other words, when not lifted for use, the handle 141 may be stored in the first slot so that the dimension of the battery pack 100 can be reduced. Thus, the battery pack 100 is placed in the electronic device. Another storage portion 17 formed or mounted on the housing 11 and used for storing the handle 141 without increasing the volume of the battery pack 100 is also within the scope of this example. In an example, elastic reset members (not shown) may be disposed at the joints of the handle 141 and the housing 11, and the handle 141 may be reset into the first slot when the handle 141 is not lifted.

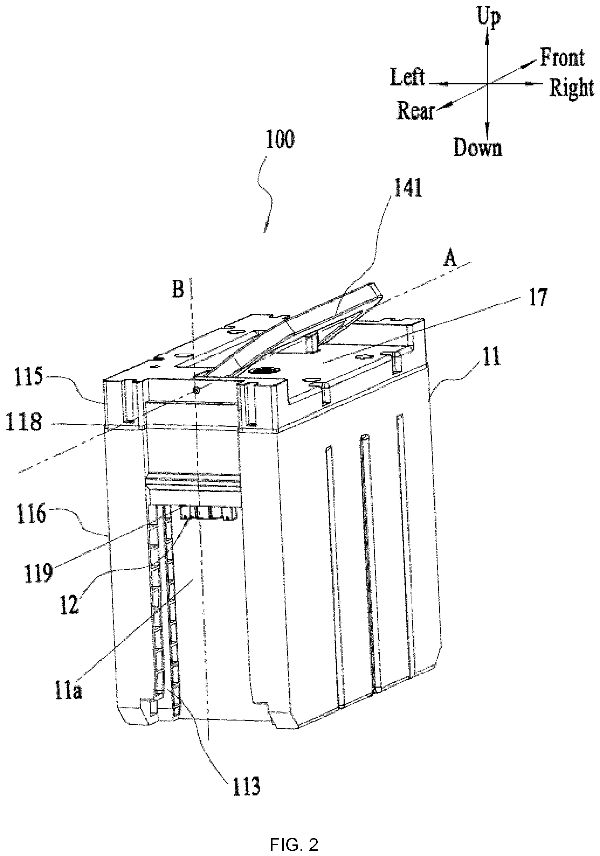

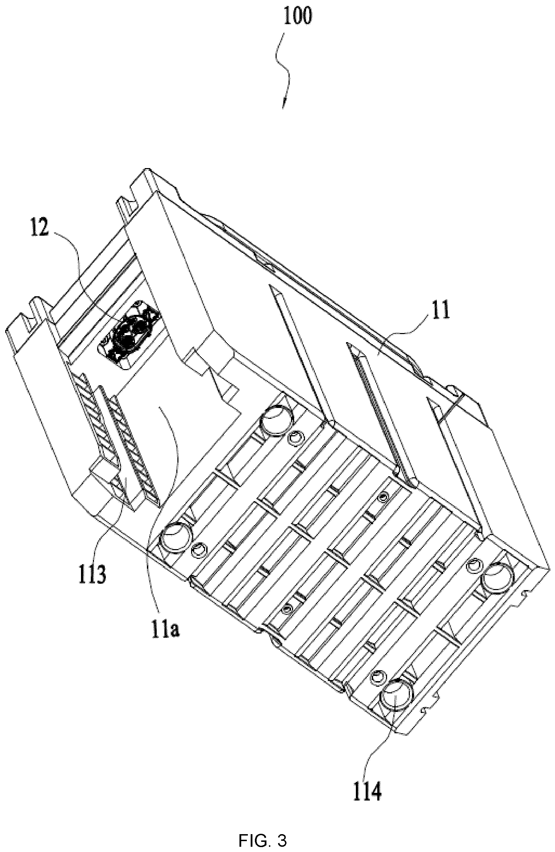

Referring to FIGS. 2 and 3, mounting rails 113 may be disposed on a side surface of the housing 11 and can guide the battery pack 100 when the battery pack 100 is mounted on the outdoor moving device. In an example, a second slot 11a whose shape is similar to an inverted "U" is disposed on at least one side surface of the housing 11, where the second slot 11a includes two opposite slot sidewalls and a top-end wall, and the opening of the second slot 11a faces the underneath of the battery pack 100. At least one slot sidewall of the second slot 11a is recessed inward so that a mounting rail 113 can be formed. In an example, the extension direction B of the mounting rail 113 is substantially perpendicular to the extension direction A of the handle 141. It is to be understood that the extension direction B of the mounting rail 113 coincides with the extension direction of the second slot 11a. In an example, the ratio of the length of the second slot 11a in the extension direction B to the length of the battery pack 100 in the extension direction B is higher than or equal to 0.5. For example, the ratio may be 0.5, 0.6, 0.7, 0.8, 0.9, or the like. In an example, a slot similar to the second slot 11a may also be disposed below the battery pack 100 and is used for implementing the guidance of the bottom of the battery pack 100.

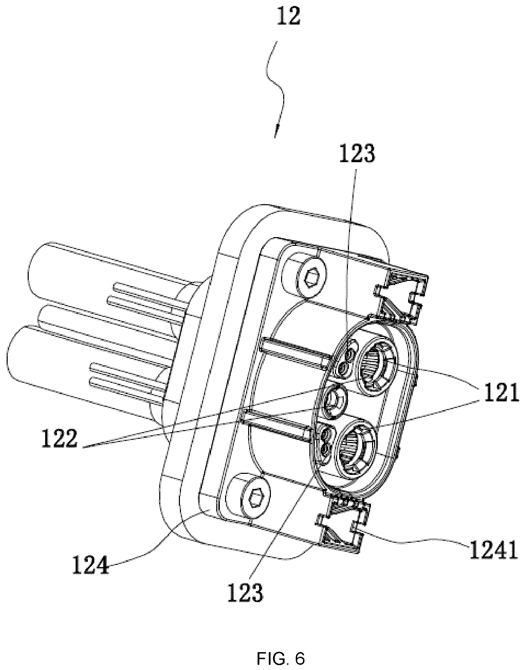

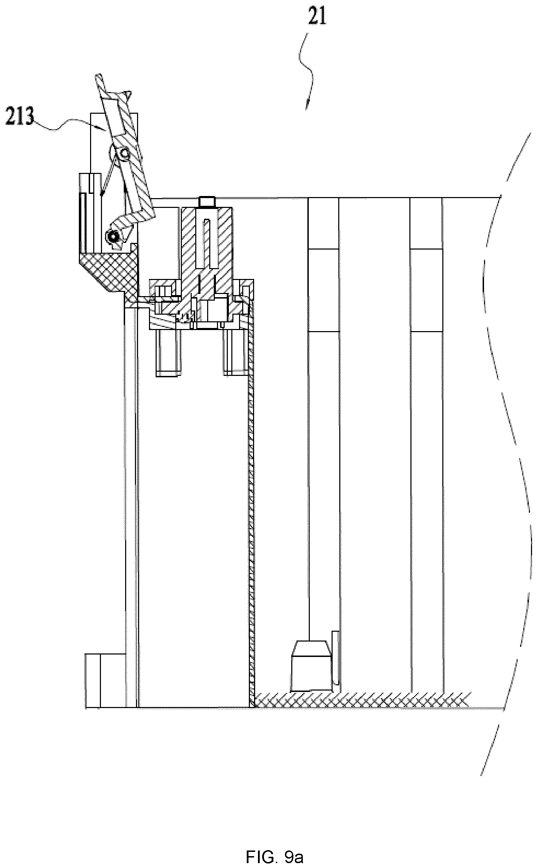

A terminal assembly 12 is mounted at the top wall of at least one second slot 11a. The distance from the terminal assembly 12 to the bottom surface of the battery pack 100 is greater than or equal to 3 cm, the distance from the terminal assembly 12 to the bottom surface of the battery pack 100 is greater than or equal to 4 cm, or the distance from the terminal assembly 12 to the bottom surface of the battery pack 100 is greater than or equal to 5 cm. In an example, the housing 11 is provided with a terminal mounting hole 11b, and the terminal assembly 12 may be mounted on the housing 11 by the terminal mounting hole 11b. In an example, the terminal assembly 12 is not higher than the height of slot walls of the second slot 11a along the extension direction A of the handle 141. The terminal assembly 12 may be externally connected to a device terminal on a self-moving device so that the battery pack 100 powers the device, or the terminal assembly 12 may be connected to a terminal on the adapter or a terminal on the inverter so that the battery pack 100 powers the device. In an example, as shown in FIG. 6, the terminal assembly 12 may include positive/negative charging terminals 121, positive/negative discharging terminals 122, and communication terminals 123. The positive/negative charging terminals 121, the positive/negative discharging terminals 122, and the communication terminals 123 may be cylindrical metal terminals, sheet-shaped metal terminals, or conductive terminals of other shapes. Optionally, a positive charging terminal and a positive discharging terminal in the terminal assembly 12 may be the same terminal, or a negative charging terminal and a negative discharging terminal in the terminal assembly 12 may be the same terminal. When the battery pack is charged or discharged, the communication terminals 123 may be shared for the communication with the adapter or the self-moving device. In an example, insulating caps may be disposed on the positive/negative charging terminals 121, the positive/negative discharging terminals 122, or the communication terminals 123. There is a hole in the middle of an insulating cap so that the metal charging terminals and the metal discharging terminals can be electrically connected to terminals on the tool. In an example, the positive/negative charging terminals 121, the positive/negative discharging terminals 122, and the communication terminals 123 may be arranged in the manner shown in FIG. 6 according to actual design requirements. In an example, to be matched with charging terminals, discharging terminals, and communication terminals in a compartment body terminal assembly 214 in a battery compartment 21 in FIGS. 9a to 10, the positive/negative charging terminals 121, the positive/negative discharging terminals 122, and the communication terminals 123 may be configured to be arranged in the same manner as the manner in which the terminals of the compartment body terminal assembly 214 in FIGS. 9a to 10 are arranged.

With continued reference to FIG. 6, the terminal assembly 12 may include a terminal block 124. The positive/negative charging terminals 121, the positive/negative discharging terminals 122, and the communication terminals 123 are disposed on the terminal block 124. Guide structures 1241 are further disposed on the terminal block 124, or the terminal block 124 can form guide structures 1241. Structures matched with the guide structures 1241 are disposed on the power tool. After the guide structures 1241 mate with the matching structures on the power tool, the terminal assembly 12 can float within a preset distance range. Thus, the case can be avoided where the connection terminals are connected unstably or damaged due to uncontrollable factors such as vibration after the battery pack 100 is mounted on the power tool. In an example, a guide structure 1241 may be a guide column and a structure on the power tool mating with the guide structure 1241may be a guide groove, or the guide structure 1241 is a guide groove and the structure on the power tool that matching with the guide structure 1241 is a guide column. In an example, a preset distance which the terminal assembly 12 may float is less than or equal to 2 cm. In an example, guide columns on the terminal block 124 are higher than the positive/negative charging terminals 121, the positive/negative discharging terminals 122, and the communication terminals 123. The positive/negative charging terminals 121, the positive/negative discharging terminals 122, and the communication terminals 123 in the terminal assembly 12 can be electrically connected to the cell module 13.

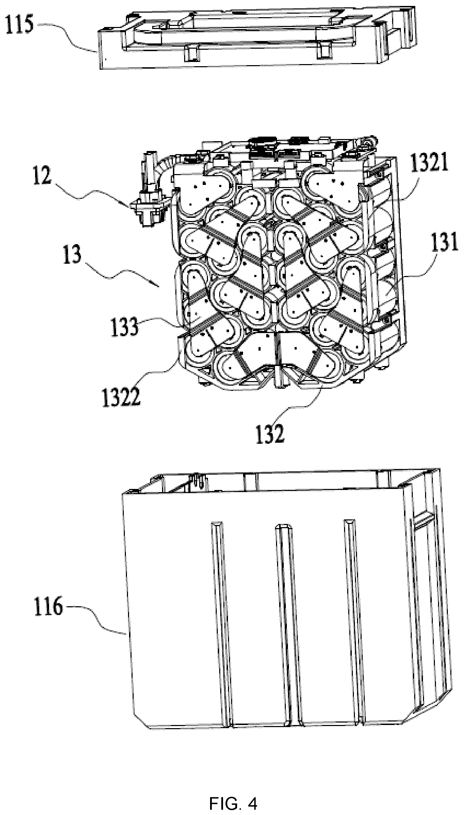

As shown in FIG. 4, the cell module 13 may constituted by multiple cells 131 connected in series and/or connected in parallel. In this example, a cell 131 may be a cylindrical cell, and the diameter of the cell 131 is greater than or equal to 3 cm, for example, the diameter of the cell 131 is 3 cm, 3.5 cm, 4 cm, or the like. In an example, the diameter of the cell 131 is greater than or equal to 4 cm, for example, the diameter of the cell 131 may be 4.5 cm, 4.6 cm, 5 cm, or the like. In this example, the height of the cell 131 is greater than or equal to 8 cm, for example, the height of the cell 131 is 8 cm, 9 cm, 10 cm, 11 cm, 12 cm, 13 cm, 13.5 cm, or the like. In an example, the ratio of the length of the cell 131 to the width of the battery pack 100 is higher than or equal to 0.7 or 0.8. In an example, the ratio of the diameter of the cell 131 to the length of the cell 131 is higher than or equal to 0.5, or higher than or equal to 0.6, or higher than or equal to 0.7.

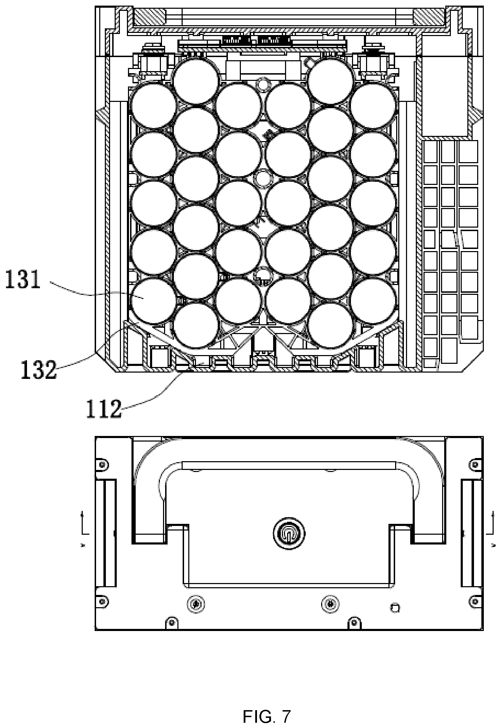

In this example, the multiple cells 131 may be lithium iron phosphate batteries. In an example, the cells 131 may be manganese phosphate ion cells or sodium ion cells. With continued reference to FIG. 4, the cell module 13 may also include a bracket 132, and the bracket 132 may be fixed to the housing 11 by screws. In an example, the bracket 132 may be constituted by two sub-brackets which are detachable and substantially symmetrical, and the two sub-brackets may be fixed by the screws. In an example, the bracket 132 includes a support structure 1321 supporting the multiple cells 131 and a guide structure 1322 capable of guiding the cell module 13 to be mounted in the housing 11. In an example, the guide structure 1322 is a guide rib or a guide groove. In an example, the guide structure 1322 is parallel to the mounting direction of the cell module 13. In an example, the guide structure 1322 is perpendicular to the length direction of the cell 131. Referring to FIG. 7, the liquid collection slots 112 formed in the bottom surface of the housing 11 are in contact with the bottom of the bracket 132 so that a liquid flowing down the bracket 132 can be collected by the liquid collection slots 112.

In an example, as shown in FIG. 1, the handle assembly may include the handle 141 disposed on the battery pack 100, and the handle 141 can be symmetrical about a midplane C. In this example, the vertical distance between the center of gravity of the battery pack 100 and the midplane C is less than or equal to twice the diameter of the cell 131.

In an example, the housing 11 may include at least a first housing 115 and a second housing 116, where the first housing 115 and the second housing 116 may be assembled together in a snap-fit manner to constitute a complete housing 11. In some examples, the first housing 115 may be the upper housing of the battery pack 100 and the second housing 116 may be the lower housing of the battery pack 100. Alternatively, the number of separate housings into which the battery pack 100 can be disassembled is equal to the number of corresponding parts. In this example, the gap between the first housing 115 and the second housing 116 can be filled with a first sealing structure 118. The first sealing structure 118 may be at least one of a sealant, a sealing ring, or a sealing sponge. In this example, the first housing 115 and the second housing 116 are made of the same material. In an example, the first housing 115 and the second housing 116 are made of different materials. In some examples, different sealing structures may be selected according to the material of the housing 11. That is to say, if the materials of the housing 11 are different, sealing structures to be filled between the first housing 115 and the second housing 116 may be different so that better sealing performance between the two housings can be ensured.

In an example, the terminal assembly 12 is mounted on the housing 11, where one end of the terminal assembly 12 can be disposed in the housing 11, and a second end of the terminal assembly 12 is exposed outside the housing 11. Therefore, a mounting gap may exist between the terminal assembly 12 and the housing 11. The gap between the terminal assembly 12 and the housing 11 may be filled with a second sealing structure 119. The second sealing structure 119 is different from the first sealing structure 118, and the second sealing structure 119 may be at least one of the sealant, the sealing ring, or the sealing sponge.

With continued reference to FIG. 4, the cell module 13 may further include multiple connection pole pieces 133, and each connection pole piece 133 can electrically connect at least two cells 131. In an example, the connection pole piece 133 is connected to the cells 131 through welding, and the ratio of welding areas to the surface area of the connection pole piece 133 is greater than or equal to 0.1. That is to say, the welding areas between the connection pole piece 133 and the cells 131 account for 10% or more of the surface area of the connection pole piece. In an example, the ratio of the welding areas to the surface area of the connection pole piece 133 is higher than or equal to 0.2, or higher than or equal to 0.3, or higher than or equal to 0.4, or higher than or equal to 0.5. In an example, the welding path between the connection pole piece 133 and the cells 131 is a closed figure such as a center, a square, a polygon, or any other figure. In an example, the connection pole piece 133 and the cells 131 may be connected through multiple-point welding so that the weld path between the connection pole piece 133 and the cells 131 includes multiple discrete welding points. The connection between the connection pole piece 133 and the cells 131 is implemented in the preceding manner. Thus, even if the cells 131 have relatively large dimensions, the stability of the connection between the cells 131 and the connection pole piece 133 can be ensured.

In an example, a group of cells 131 connected together by the connection pole piece 133 is referred to as a battery unit, and each battery unit may be connected to two connection pole pieces 133, that is, a positive pole piece and a negative pole piece. The positive pole piece is connected to the positive pole of each cell 131 in the battery unit and can be electrically connected to a positive charging/discharging terminal. The negative pole piece is connected to the negative pole of each cell 131 in the battery unit and can be electrically connected to a negative charging/discharging terminal. The distance between a pair of connection pole pieces 133 connecting the positive pole of a battery unit to the negative pole of the battery unit along the extension direction of the cell 131 is greater than or equal to the length of the cell 131. In an example, the minimum distance between the pair of connection pole pieces 133 connecting the positive pole of the battery unit to the negative pole of the battery unit is greater than or equal to 7 cm, or greater than or equal to 8 cm, or greater than or equal to 9 cm.

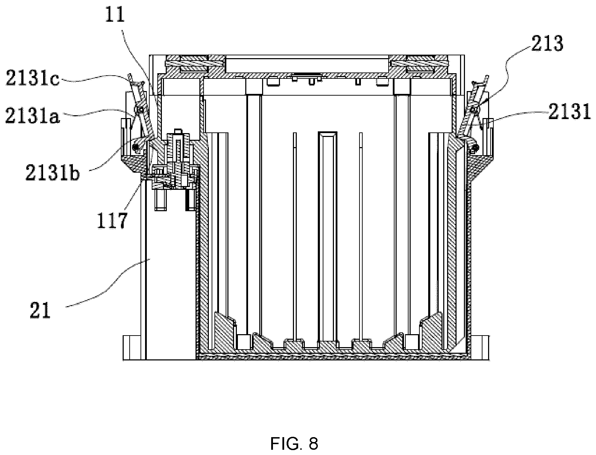

As shown in FIGS. 8 to 11, the battery compartment 21 may be included in the power tool or a charger. The battery pack 100 can be accommodated in the battery compartment 21. The battery compartment 21 may include a compartment body 211 and first positioning portions 212 disposed on the inner side of the bottom end of the compartment body 211. The battery pack 100 is accommodated in the compartment body 211, and the mounting rails 113 have a guiding function when the battery pack 100 is mounted to the compartment body 211. In an example, second positioning portions 114 are further disposed on the outer side of the bottom end of the housing 11 of the battery pack 100. After the battery pack 100 is mounted in the battery compartment 21, the first positioning portions 212 and the second positioning portions 114 can mate with each other to position the battery pack 100, thereby preventing the battery pack 100 from shaking in the compartment body 211. In an example, a first positioning portion 212 may be a raised structure, and a second positioning portion 114 may be a recessed structure corresponding to the raised structure. For example, the first positioning portion 212 may be a raised cylinder, and the second positioning portion 114 may be a cylindrical recessed slot. Alternatively, a first positioning portion 212 may be a recessed structure, and a second positioning portion 114 may be a corresponding raised structure. In an example, the first positioning portion 212 and the second positioning portion 114 constitute a pair of positioning assemblies, and one or more pairs of positioning assemblies may be disposed in the battery pack 100 and the compartment body 211. The number of positioning assemblies may be determined according to the contour shape of the battery pack 100 or the battery compartment 21. For example, the battery pack 100 is in the shape of the cuboid, and four pairs of positioning assemblies may be disposed based on four corners of the bottom surface of the cuboid.

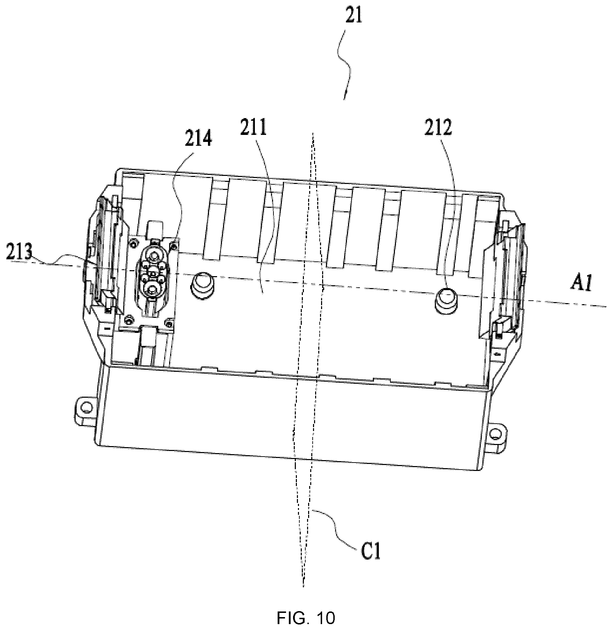

In an example, the battery compartment 21 may further include a locking assembly 213 disposed on the compartment body 211 and capable of locking the battery pack 100 in the compartment body 211. In an example, the locking assembly 213 has at least two locking portions 2131 separately disposed. In an example, the two locking portions 2131 may be symmetrically disposed at the opening of the battery compartment 21. For example, the locking portions 2131 are symmetrically disposed on two side surfaces along the length direction A1 of the compartment body 211 separately. The length direction A1 of the compartment body 211 coincides with the front and rear direction of the battery pack 100 in FIG. 1. In other words, the length direction A1 of the compartment body 211 coincides with the extension direction A of the handle 141 after the battery pack 100 is mounted to the compartment body 211. Referring to FIG. 10, in a direction perpendicular to the length direction A1, the compartment body 211 has a first center plane C1 by which the compartment body 211 is substantially divided into two average parts along the direction perpendicular to A1. In this example, after the battery pack 100 is mounted to the compartment body 211, the first center plane C1 is substantially parallel to or substantially coincides with the midplane C of the handle 141 in the battery pack 100. It is to be understood that the two locking portions 2131 are located on two sides of the first center plane C1 separately and the distances from the two locking portions 2131 to the first center line C1 are substantially the same. In this example, the compartment body terminal assembly 214 and the two locking portions 2131 are substantially in the same direction, for example, substantially in the direction A1. The distance between the compartment body terminal assembly 214 and one of the locking portions 2131 is less than the distance from the compartment body terminal assembly 214 to the first center plane C1. Thus, after the battery pack 100 is mounted to the compartment body 211, the locking portion 2131 is close to the terminal assembly 12. After the locking portions 2131 lock the battery pack 100 and the compartment body 211, the terminal assembly 12 of the battery pack 100 and the compartment body terminal assembly 214 in the battery compartment 21 can be coupled to each other more closely.

The locking portion 2131 to the compartment body terminal assembly 214 may be understood as the distance from any positional point of the locking portion 2131 to any positional point of the compartment body terminal assembly 214 in the direction A1. In an example, the locking portion 2131 includes multiple components (such as an elastic member 2131a, a stopper portion 2131b, and a rotary toggle 2131c described below), and the compartment body terminal assembly 214 also includes multiple components (not shown). When a connection line between any positional point on any component of the locking portion 2131 and any positional point on any component of the compartment body terminal assembly 214 is parallel to the direction A1, the distance between the two points may be understood as the distance from the locking portion 2131 to the compartment body terminal assembly 214. The distance from the compartment body terminal assembly 214 to the first center plane C1 may be understood as the distance from any positional point on the compartment body terminal assembly 214 to the first center plane C1.

In an example, each locking portion 2131 has a first state and a second state. When the battery pack 100 is retained in the battery compartment 21 and the battery pack 100 is completely disengaged from the battery compartment 21, the locking portion 2131 is in the second state. In the process where the battery pack 100 is inserted into the battery compartment 21, the locking portion 2131 is in the first state. It is to be understood that when the locking portion 2131 is in the first state, relevant structures of the locking portion 2131 change as the battery pack 100 continuously enters the compartment body 211 until the battery pack 100 no longer moves with respect to the compartment body 211.

In an example, the housing 11 of the battery pack 100 is provided with mating portions 117 capable of mating with the locking portions 2131 to retain the battery pack 100 in the compartment body 211. In an example, a mating portion 117 may be a prismatic structure or a cylindrical structure formed by the raised housing 11. For example, the mating portion 117 may be a prism with a trapezoidal or triangular cross section, where a longer side of two parallel sides of the trapezoid is formed on the housing 11 or one side of the triangle is formed on the housing 11. That is to say, the mating portion 117 has two inclined surfaces so that the battery pack 100 can be conveniently mounted to or removed from the compartment body 211.

As shown in FIG. 8, the locking portion 2131 includes at least the elastic member 2131a, the stopper portion 2131b, and the rotary toggle 2131c. The elastic member 2131a may be a spring member disposed on a rotating shaft of the locking portion 2131. Two ends of the spring member extend to be capable of abutting against a wall of the compartment body, and the locking portion 2131 is rotatable about the rotating shaft. Assuming that the battery pack 100 is not mounted to the compartment body 211, the elastic member 2131a is in a relaxed state, that is, the elastic member 2131a is not pressed and substantially has no elastic force. In this case, the locking portion 2131 is in the second state and the stopper portion 2131b is in an initial state. In the process where the battery pack 100 is mounted to the compartment body 211 from top to bottom, the lower inclined surface of the mating portion 117 is in contact with the upper surface of the stopper portion 2131b. As the battery pack 100 continues moving downward, the mating portion 117 can push the stopper portion 2131b outward, the elastic member 2131a is continuously compressed, and the locking portion 2131 is in the first state. After the mating portion 117 continues moving downward and passes the stopper portion 2131b, the elastic member 2131a can release the elastic force instantaneously or within a short time to push the stopper portion 2131b inward to the initial position, and the locking portion 2131 is restored to and retained in the second state, that is, the state shown in FIG. 8. Thus, the lower surface of the stopper portion 2131b can abut against the upper inclined surface of the mating portion 117. The battery pack 100 cannot move upward without the intervention of an external force, thereby preventing the battery pack 100 from shaking up and down in the compartment body 211. That is to say, the user may move the stopper portion 2131b outward away from the mating portion 117 by pushing the rotary toggle 2131c to rotate the locking portion 2131 about the rotating shaft so that the user can remove the battery pack 100 from the compartment body 211. Referring to FIG. 9a, after the battery pack 100 is removed from the compartment body 211, the state of the locking portion 2131 coincides with the state shown in FIG. 8.

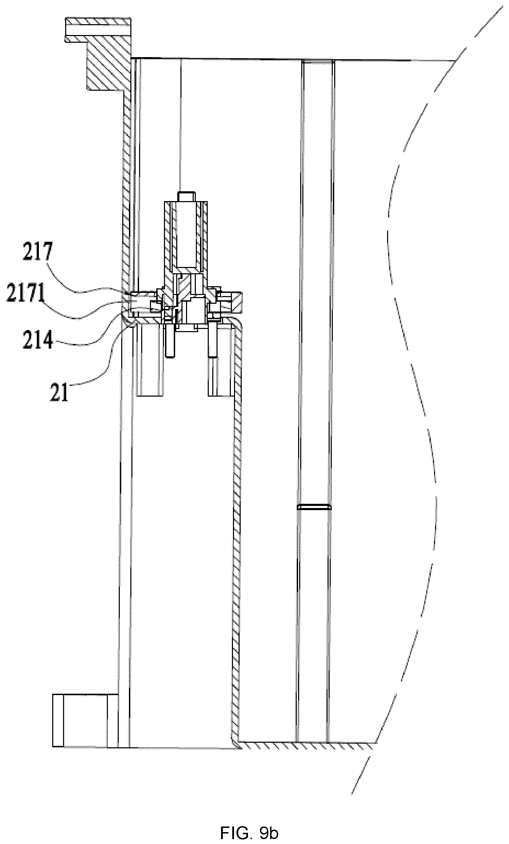

As shown in FIG. 9b, the battery compartment 21 may also include a terminal cover 217 which can accommodate part of the compartment body terminal assembly 214 and retains the compartment body terminal assembly 214 on the battery compartment 21 in a floatable manner. That is to say, an accommodating space 2171 can be formed between the terminal cover 217 and the compartment body 211 so that part of the structure of the compartment body terminal assembly 214 is movable in a small range in a horizontal direction or a vertical direction within the accommodating space 2171. Thus, when the battery pack 100 is placed or when the battery pack 100 vibrates in the battery compartment 21 to deviate up and down, vertically, from side to side, or horizontally, a displacement of the deviation can be accommodated by the preceding accommodating space 2171 so that damage to the compartment body terminal assembly 214 and surrounding connectors is reduced, thereby improving the reliability of the compartment body terminal assembly 214.

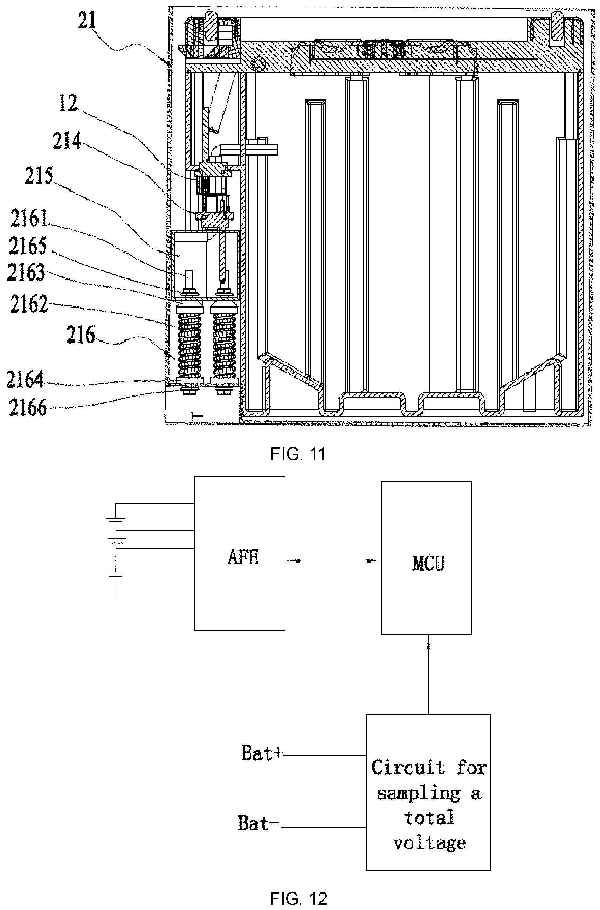

In an example, as shown in FIG. 11, a floating block 215 is further included in the battery compartment 21, where one end of the floating block 215 is connected to the compartment body terminal assembly 214 and the other end of the floating block 215 is connected to the battery compartment 21 by at least one floating structure 216. The floating structure 216 may include guide structures 2161 which can penetrate between the floating block 215 and the compartment body 21, springs 2162 sleeved on the guide structures 2161, conical bodies 2163 which can be disposed at the upper ends of the springs 2162, and bottom cover plates 2164 which can be disposed at the lower ends of the springs 2162. In an example, the floating structure 216 further includes top cover plates 2165 and bottom pressing plates 2166, where after the floating structure 216 is mounted between the floating block 215 and the battery compartment 21, the top cover plates 2165 are fixed at the uppermost ends of the guide structures 2161 and can retain the connection between the floating structure 216 and the floating block 215, and the bottom pressing plates 2166 are fixed at the lowermost ends of the guide structures 2161 and can retain the connection between the floating structure 216 and the battery compartment 21.

In this example, the floating structure 216 may limit the floating block 215 through the top cover plates 2165 at the upper ends to prevent the floating block 215 from completely disengaging from the conical bodies 2163. The floating structure 216 may press the battery compartment 21 through the bottom pressing plates 2166 and the bottom cover plates 2164 at the lower ends. When the battery pack 100 is placed or when the battery pack 100 vibrates in the battery compartment 21 to deviate up and down or vertically, the amount of the deviation may be absorbed by the springs 2162. When the battery pack 100 is placed or the battery pack 100 vibrates in the battery compartment 21 to deviate from side to side or horizontally, part of the floating block 215 deviates horizontally and can drive the conical bodies 2163 to move in an up and down direction so that the springs 2162 are moved in the up and down direction to absorb the amount of the deviation. In summary, when the battery pack 100 deviates or vibrates, the amount of the deviation may be absorbed by the floating structure 216 so that the damage to the compartment body terminal assembly 214 and the surrounding connectors is reduced, thereby improving the reliability of the compartment body terminal assembly 214.

In an example, as shown in FIG. 12, a detection unit 15 and a control unit 16 are further disposed in the battery pack 100. In this example, the detection unit 15 may be an active front end (AFE). The control unit 16 may be a microcontroller unit (MCU). In this example, the AFE can perform single-cell detection on the multiple cells 131. That is, a cell parameter of each cell 131 is detected separately, for example, a voltage, a current, a temperature, or the like of a single cell 131 can be detected. The MCU can control the charging/discharging states of the multiple cells 131 and can also collect the total voltage of the battery pack 100. The AFE and the MCU may be disposed on the same circuit board or may be disposed on different circuit boards separately.

In an example, the AFE may be communicatively connected to the MCU so that the AFE and the MCU can perform data interaction. The AFE may perform a bidirectional reset function with the MCU, that is, the AFE can reset the MCU and the MCU can reset the AFE. For example, the MCU may acquire a cell parameter detected by the AFE and can also collect another battery pack parameter of the battery pack 100 and compare the preceding cell parameter with the battery pack parameter to confirm whether the AFE is abnormal. If the AFE is abnormal, the AFE is controlled to be reset. For example, the cell parameter is a voltage of the single cell 131, and the battery pack parameter is the total voltage of the battery pack 100. According to the total voltage of the battery pack 100, the voltage of the single cell 131, or the total number of cells, the MCU may determine whether the AFE is abnormal. If it is determined that the AFE is abnormal, it is considered that a first preset condition is met, thereby controlling the AFE to be reset. In an example, in the process where the AFE performs the data interaction with the MCU, the AFE may determine whether the MCU is abnormal according to whether communication data sent by the MCU is received within preset time. If the communication data sent by the MCU is not received within the preset time, it is considered that a second preset condition is met, thereby controlling the MCU to be reset.

The energy storage apparatus of the present application has the properties of large capacity, high charge and discharge rate, and high energy.

## Claims

1. A battery pack for powering an electronic device, comprising:
a housing (11) configured to be mounted to the electronic device and supported by the electronic device;
a plurality of cells (131) disposed in the housing (11) and capable of providing a voltage greater than or equal to 36V; and
a terminal assembly (12) connected to the plurality of cells (131) and configured to electrically connect the battery pack to the electronic device;
wherein a capacity of the battery pack is greater than or equal to 20 Ah, and a ratio of the capacity of the battery pack to a weight of the battery pack is higher than or equal to 2 Ah/Kg.

2. The battery pack according to claim 1, wherein the plurality of cells (131) at least comprise lithium iron phosphate cells.

3. The battery pack according to claim 1, wherein a nominal voltage of the battery pack is higher than or equal to 56 V .

4. The battery pack according to claim 1, wherein a weight of the battery pack is greater than or equal to 9 Kg.

5. The battery pack according to claim 1, wherein a length of each of the plurality of cells (131) is greater than or equal to 8 cm.

6. The battery pack according to claim 1, wherein a diameter of each of the plurality of cells (131) is greater than or equal to 3 cm.

7. The battery pack according to claim 1, wherein an average discharging current of the battery pack is greater than or equal to 30 A.

8. The battery pack according to claim 1, wherein the electronic device comprises an outdoor moving device.

9. The battery pack according to claim 1, wherein the electronic device comprises an adapter.

10. A battery pack for powering an outdoor moving device, comprising:
a housing (11) configured to be mounted to the outdoor moving device and supported by the outdoor moving device;
a handle (141) disposed on the housing (11) and configured to be gripped by a user;
a plurality of cells (131) disposed in the housing (11); and
a terminal assembly (12) configured to be electrically connected to the outdoor moving device;
wherein an energy of the battery pack is greater than or equal to 2 KWh, and a ratio of a length of the handle (141) to a length of the battery pack in an extension direction of the handle (141) is greater than or equal to 0.6.

11. The battery pack according to claim 10, wherein a ratio of a length of the handle (141) to a length of the battery pack in an extension direction of the handle (141) is greater than or equal to 0.9.

12. The battery pack according to claim 10 or 11, wherein the handle (141) and the housing (11) are integrally formed.

13. The battery pack according to claim 10 or 11, further comprising: a mounting rail (113) disposed on a side surface of the battery pack to guide the battery pack when the battery pack is mounted on the outdoor moving device.

14. The battery pack according to claim 13, wherein an extension direction of the handle (141) is perpendicular to an extension direction of the mounting rail (113).

15. The battery pack according to claim 11, wherein the housing (11) is formed with a storage portion (17), and the handle (141) is capable of being rotated to be stored in the storage portion (17).

16. A battery pack for powering an outdoor moving device, comprising:
a housing (11) configured to be mounted to the outdoor moving device and supported by the outdoor moving device;
a handle assembly disposed on the housing (11) and configured to be gripped by a user;
a plurality of cells (131) disposed in the housing (11); and
a terminal assembly (12) configured to be electrically connected to the outdoor moving device;
wherein an energy of the battery pack is greater than or equal to 2 KWh, and the handle assembly comprises at least two separate handles (141).

17. The battery pack according to claim 16, wherein the at least two separate handles (141) are mounted on the same surface of the battery pack.

18. The battery pack according to claim 16, wherein the at least two separate handles (141) are mounted on the different surfaces of the battery pack separately.

19. The battery pack according to claim 16, further comprising: a mounting rail (113) disposed on a side surface of the battery pack to guide the battery pack when the battery pack is mounted on the outdoor moving device.

20. The battery pack according to claim 19, wherein an extension direction of at least one of the at least two separate handles (141) is perpendicular to an extension direction of the mounting rail (113).

21. A battery pack, comprising:
a housing (11);
a cell module (13) comprising a plurality of cells (131) and disposed in the housing (11), wherein the plurality of cells (131) are connected in series and/or in parallel; and
a terminal assembly (12) electrically connected to the plurality of cells (131);
wherein a bottom of the housing (11) is formed with liquid collection slots (112).

22. The battery pack according to claim 21, wherein areas of the liquid collection slots (112) on a section of the battery pack are greater than or equal to 20 cm².

23. The battery pack according to claim 21, wherein the cell module further comprises a bracket (132), and the bracket (132) is capable of directing a liquid to the liquid collection slots.

24. The battery pack according to claim 21, wherein the plurality of cells (131) are lithium iron phosphate cells.

25. A battery pack for powering a power tool, comprising:
a housing (11) configured to be mounted to the power tool and supported by the power tool;
a cell module (13) comprising a plurality of cells (131) and disposed in the housing (11), wherein the plurality of cells (131) are connected in a combined series-parallel configuration; and
a terminal assembly (12) electrically connected to the plurality of cells (131) and configured to electrically connect the battery pack to the power tool;
wherein the terminal assembly (12) comprises guide structures (1241), and the power tool comprises corresponding structures that match the guide structures; after the guide structures (1241) match the corresponding structures, the terminal assembly is capable of floating within a range of a preset distance range.

26. The battery pack according to claim 25, wherein the preset distance is less than or equal to 2 cm.

27. The battery pack according to claim 25, wherein the guide structures are guide columns and the corresponding structures are guide grooves.

28. The battery pack according to claim 25, wherein the guide structures are guide grooves and the corresponding structures are guide columns.

29. The battery pack according to claim 25, wherein the terminal assembly (12) comprises at least a positive charging terminal, a negative charging terminal, a positive discharging terminal and a negative discharging terminal.

30. The battery pack according to claim 29, wherein the positive charging terminal and the positive discharging terminal are the same terminal, or the negative charging terminal and the negative discharging terminal are the same terminal.

31. A battery pack for powering a power tool, comprising:
a housing (11) configured to be mounted to the power tool and supported by the o power tool, wherein the housing (11) defines a bottom surface of the battery pack;
a cell module (13) comprising a plurality of cells (131) and disposed in the housing (11), wherein the plurality of cells (131) are connected in series and/or in parallel; and
a terminal assembly (12) electrically connected to the plurality of cells (131) and configured to electrically connect the battery pack to the power tool;
wherein a height difference between the terminal assembly (12) and the bottom surface of the battery pack is greater than or equal to 3 cm.

32. The battery pack according to claim 31, wherein the housing (11) is provided with a mounting rail (113), the mounting rail (113) is disposed on a side surface of the battery pack, and the mounting rail (113) has a guiding function when the battery pack is mounted to the power tool.

33. The battery pack according to claim 32, wherein the terminal assembly (12) is arranged at a first end of the mounting rail (113).

34. The battery pack according to claim 32, wherein a second end of the mounting rail (113) extends to the bottom surface of the battery pack.

35. The battery pack according to claim 32, wherein a ratio of a length of the mounting rail (113) to a height of the battery pack is greater than or equal to 0.5.

36. The battery pack according to claim 31, wherein a recess is formed at a bottom of the housing (11), and the terminal assembly (12) is arranged in the recess.

37. A battery compartment, comprising:
a compartment body (211) configured to accommodate a battery pack; and
a locking assembly (213) disposed on the compartment body (211) and configured to lock the battery pack;
wherein the locking assembly (213) comprises at least two locking portions (2131) separately disposed, the at least two locking portions (2131) have a first state and a second state, the at least two locking portions (2131) are in the first state when the battery pack is installed in the compartment body (211); after the at least two locking portions (2131) are locked, the at least two locking portions (2131) enter and maintain the second state; after the battery pack is removed from the compartment body (211), the at least two locking portions (2131) automatically restore to the second state.

38. The battery compartment according to claim 37, wherein the locking assembly (213) comprises two locking portions (2131); the two locking portions (2131) are arranged on opposite sides of the battery compartment (211).

39. The battery compartment according to claim 37, wherein each of the at least two locking portions (2131) comprises at least: an elastic member (2131a) mounted on a rotation shaft of the each of the at least two locking portions (2131) and configured to keep the each of the at least two locking portions (2131) in the second state; a stopper portion (2131b) configured to abut against the housing (11) of the battery pack to keep the battery pack in the compartment body (211); and a rotary toggle (2131c) exposed outside the compartment body (211) and configured to allow a user to change the state of the each of the at least two locking portions (2131).

40. The battery compartment according to claim 39, wherein when the elastic member (2131a) is in a relaxed state, the each of the at least two locking portions (2131) is in the second state; when the elastic member (2131a) is in a compressed state, the each of the at least two locking portions (2131) is in the first state.

41. A tool system, comprising at least a power tool and a battery pack;
wherein the battery pack comprises a terminal assembly (12);
wherein the power tool comprises a battery compartment (21);
wherein the battery compartment (21) comprises:
a compartment body (211) configured to accommodate the battery pack;
a compartment body terminal assembly (214) configured to dock with the terminal assembly (12) of the battery pack; and
a locking assembly (213) disposed on the compartment body (211) and configured to lock the battery pack;
wherein the locking assembly (213) comprises at least two locking portions (2131), and the at least two locking portions (2131) are respectively arranged on both sides of a length direction of the compartment body (211);
wherein the compartment body (211) has a first center plane (C1) in a direction perpendicular to the length direction of the compartment body (211); and
wherein a distance between one of the at least two locking portions (2131) and the compartment body terminal assembly (214) is less than a distance between the compartment body terminal assembly (214) and the first center plane (C1).

42. A tool system, comprising at least a power tool and a battery pack;
wherein the power tool comprises a battery compartment (21), and the battery compartment comprises a compartment body (211) and first positioning portions (212);
wherein the battery pack comprises:
a housing (11) mounted to the compartment body (211) and supported by the compartment body (211);
a plurality of cells (131) disposed in the housing (11);
a terminal assembly (12) connected to the plurality of cells (131) and configured to electrically connect the battery pack to the power tool;
a mounting rail (113) disposed on a side surface of the housing (11), wherein the mounting rail (113) has a guiding function when the battery pack is mounted to the battery compartment (21); and
second positioning portions (114) disposed a bottom surface of the housing, wherein the second positioning portions (114) mate with the first positioning portions (212) to play a positioning function when the battery pack is mounted in the battery compartment (21).

43. The tool system according to claim 42, wherein the first positioning portions (212) are raised structures, and the second positioning portions (114) are recessed structures.

44. The tool system according to claim 42, wherein the terminal assembly (12) is arranged at an end of the mounting rail (113).

45. A battery pack, comprising:
a housing (11) comprising at least a first housing (115) and a second housing (116);
a plurality of cells (131) disposed in the housing (11);
a terminal assembly (12) disposed on the housing (11) and electrically connected to the plurality of cells (131), wherein a first end of the terminal assembly (12) is arranged inside the housing (11), and a second end of the terminal assembly (12) is arranged outside the housing (11); and
a first sealing structure (118) and a second sealing structure (119) different from the first sealing structure, wherein the first sealing structure (118) is configured to seal a gap between the first housing (115) and the second housing (116), and the second sealing structure (119) is configured to seal a gap between the terminal assembly (12) and the housing (11).

46. The battery pack according to claim 45, wherein the first sealing structure (118) is at least one of a sealant, a sealing ring, or a sealing sponge.

47. The battery pack according to claim 45, wherein the second sealing structure (119) is at least one of a sealant, a sealing ring, or a sealing sponge.

48. A sealing method for a battery pack, wherein the battery pack comprises:
a housing (11) comprising at least a first housing (115) and a second housing (116);
a plurality of cells (131) disposed in the housing (11); and
a terminal assembly (12) disposed on the housing (11) and electrically connected to the plurality of cells (131), wherein a first end of the terminal assembly (12) is arranged inside the housing (11), and a second end of the terminal assembly (12) is arranged outside the housing (11);
wherein the sealing method comprises:
using a first sealing structure (118) to seal a gap between the first housing (115) and the second housing (116); and
using a second sealing structure (119) different from the first sealing structure (118) to seal a gap between the terminal assembly (12) and the housing (11).

49. A battery pack for powering an outdoor moving device, comprising:
a housing (11) configured to be mounted to the outdoor moving device and supported by the outdoor moving device;
a plurality of cells (131) disposed in the housing (11), wherein each of the plurality of cells (131) is cylindrical and a diameter of the each of the plurality of cells (131) is greater than or equal to 3 cm;
a terminal assembly (12) configured to be electrically connected to the outdoor moving device;
a handle assembly disposed on the housing (11) and configured to be gripped by a user; and
a mounting rail (113) disposed on the housing (11) and having a guiding function when the battery pack is mounted to the outdoor moving device;
wherein a handle (141) in the handle assembly is symmetrical about a midplane (C), and a vertical distance between the center of gravity of the battery pack and the midplane (C) is less than or equal to twice the diameter of the each of the plurality of cells (131).

50. The battery pack according to claim 49, wherein the mounting rail (113) comprises two opposing rails.

51. The battery pack according to claim 49, wherein the mounting rail (113) comprises a rail.

52. The battery pack according to claim 49, wherein the mounting rail (113) is formed on the housing (11).

53. The battery pack according to claim 49, wherein the plurality of cells (131) are lithium iron phosphate cells.

54. A battery pack for powering an outdoor moving device, comprising:
a housing (11) configured to be mounted to the outdoor moving device and supported by the outdoor moving device; and
a cell module (13) comprising a plurality of cells (131) and a bracket (132), wherein the bracket (132) comprises a support structure (1321) supporting the plurality of cells (131) and a guide structure (1322) guiding the cell module (13) to be mounted in the housing (11).

55. The battery pack according to claim 54, wherein the guide structure (1322) is a guide rib.

56. The battery pack according to claim 54, wherein the guide structure (1322) is a guide groove.

57. The battery pack according to claim 54, wherein the guide structure (1322) is parallel to a mounting direction of the cell module (13).

58. The battery pack according to claim 54, wherein the guide structure (1322) is perpendicular to a length direction of each of the plurality of cells (131).

59. The battery pack according to claim 54, wherein each of the plurality of cells (131) is cylindrical and a diameter of the each of the plurality of cells (131) is greater than or equal to 3 cm.

60. The battery pack according to claim 54, wherein a length of each of the plurality of cells (131) is greater than or equal to 8 cm.

61. A battery pack for powering an outdoor moving device, comprising:
a housing (11) configured to be mounted to the outdoor moving device and supported by the outdoor moving device; and
a cell module (13) mounted in the housing (11) and comprising a plurality of cells (131) and a plurality of connection pole pieces (133), wherein each of the plurality of connection pole pieces (133) connects at least two ones of the plurality of cells (131);
wherein each of the plurality of connection pole pieces (133) is connected to each of the plurality of cells (131) through welding, and a ratio of a welding area to a surface area of the each of the plurality of connection pole pieces (133) is greater than or equal to 0.1.

62. The battery pack according to claim 61, wherein a diameter of the each of the plurality of cells (131) is greater than or equal to 3 cm.

63. The battery pack according to claim 61, wherein a welding path between the each of the plurality of connection pole pieces (133) and the each of the plurality of cells (131) is a closed figure.

64. A battery pack for powering an outdoor moving device, comprising:
a housing (11) configured to be mounted to the outdoor moving device and supported by the outdoor moving device; and
a cell module (13) mounted in the housing (11) and comprising a plurality of cells (131);
wherein each of the plurality of cells (131) is cylindrical and a diameter of the each of the plurality of cells (131) is greater than or equal to 3 cm.

65. The battery pack according to claim 64, wherein a length of the each of the plurality of cells (131) is greater than or equal to 8 cm.

66. The battery pack according to claim 64, wherein a ratio of a length of the each of the plurality of cells (131) to a width of the battery pack is greater than or equal to 0.7.

67. A battery pack for powering an outdoor moving device, comprising:
a housing (11) configured to be mounted to the outdoor moving device and supported by the outdoor moving device;
a cell module (13) mounted in the housing (11) and comprising a plurality of cells (131), a positive pole piece and a negative pole piece, wherein the positive pole piece is connected to a positive pole of at least one of the plurality of cells (131), and the negative pole piece is connected to a negative pole of at least one of the plurality of cells (131); and
a terminal assembly (12) configured to be electrically connected to the outdoor moving device and comprising a positive terminal connected to the positive pole piece and a negative terminal connected to the negative pole piece;
wherein a minimum distance between the positive pole piece and the negative pole piece is greater than or equal to 7 cm.

68. A battery pack, comprising:
a housing (11);
a cell module (13) mounted in the housing (11) and comprising a plurality of cells (131);
a detection unit (15) configured to perform single-cell detection on the plurality of cells (131); and
a control unit (16) configured to control the charging/discharging of the plurality of cells (131) and communicatively connected to the detection unit (15);
wherein the control unit (16) is configured to reset the detection unit (15) under a first preset condition, and the detection unit (15) is configured to reset the control unit (16) under a second preset condition.

69. The battery pack according to claim 68, wherein the detection unit (15) is further configured to collect a single-cell voltage of each one of the plurality of cells (131) and send the single-cell voltage of the each one of the plurality of cells (131) to the control unit (16), the control unit (16) is further configured to obtain a total voltage of the battery pack, determine whether the detection unit (15) is abnormal based on the total voltage and the single-cell voltage, and determine that the first preset condition is satisfied when the detection unit (15) is abnormal.

70. The battery pack according to claim 68, wherein the detection unit (15) is further configured to determine that a second preset condition is satisfied when the detection unit (15) does not receive communication from the control unit (16) within a preset time.
